# EUROPÄISCHE PATENTSCHRIFT

(11) **EP 0 429 880 B1**
(45) Veröffentlichungstag und Bekanntmachung des Hinweises auf die Patenterteilung: **28.02.1996**
(21) Anmeldenummer: 90120959.3
(22) Anmeldetag: 01.11.1990
(51) Int. Cl.: C23F 11/00, C23F 15/00, F16B 13/00, B05D 7/00, B05D 7/16, F16B 19/00, C23C 28/00, E04F 13/08

(54) **Verfahren zur korrosionsschützenden Beschichtung von Dübeln**
Method for corrosion protection of rivets
Procédé de protection contre la corrosion de rivets

(30) Priorität: 04.11.1989 DE 3936736
(43) Veröffentlichungstag der Anmeldung: 05.06.1991
(73) Patentinhaber: Sawatzki, Monika, D-48249 Dülmen (DE)
(72) Erfinder: Sawatzki, Monika, D-48249 Dülmen (DE)
(74) Vertreter: Herrmann-Trentepohl, Werner, Dipl.-Ing.

(56) Entgegenhaltungen:
- DE-A- 1 500 856
- FR-A- 2 112 421
- FR-A- 2 182 987
- US-A- 4 802 807

## Beschreibung

Die Erfindung betrifft ein Verfahren zur korrosionsschützenden Beschichtung von Dübeln, insbesondere von Einschlagdübeln für den Fassadenbau unter Aufbringung einer zinkhaltigen Schutzschicht sowie damit hergestellte korrosionsgeschützte Einschlagdübel.

Im Fassadenbau werden Einschlagdübel dazu verwandt, Bauelemente an einer hinreichend festen Unterkonstruktion, die unter der Spannung des Dübels nicht nachgibt, zu befestigen. In der Regel wird dazu eine Belattung auf die Außenwand eines Gebäudes aufgebracht, an der anschließend Dämmaterialien und/oder Fassadenelemente angebracht werden. Bei dieser Anwendung haben Einschlagdübel gegenüber anderen Befestigungselementen den Vorteil einer verhältnismäßig einfachen Bauweise und Handhabung, was bei der Vielzahl der regelmäßig anzubringenden Befestigungspunkte mit einer Verminderung der Kosten einhergeht.

Ein Einschlagdübel erzeugt den Kraftschluß in einer meistens durch Bohren hergestellten Aussparung der Unterkonstruktion durch die Verformung seines Schaftes, welche durch das Untermaß der Aussparung in der Unterkonstruktion gegenüber dem Dübelaußendurchmesser erzwungen wird. Die zum Eintreiben des Dübels erforderliche Nachgiebigkeit wird durch einen Schlitz gewährleistet, welcher in tangentialer Richtung den erforderlichen Spielraum für die elastische Durchmesseränderung des Schaftes schafft, wenn der Dübel eingetrieben wird. Die Hülsenform eines solchen Dübels ermöglicht dessen radiale Elastizität, mit der der Formschluß in der Aussparung der Unterkonstruktion zustande kommt. Diese radiale Verformung wird durch das Eintreiben des abgefaßten freien Endes der Hülse für den Schlagkopf ausgelöst. Infolge der Kelchform des Schlagkopfes ist es möglich, ohne zusätzliche Mittel das betreffende Hülsenende derart formsteif zu machen, daß der Schlagkopf nach dem Eintreiben des Schaftes das Konstruktionsteil an der betreffenden Befestigungsstelle formschlüssig gegen Abziehen von der Unterkonstruktion festhält.

Der feste Sitz der Konstruktionsteile und damit auch der Fassadenelemente hängt entscheidend von der Festigkeit des Sitzes des Schaftes in der Unterkonstruktion ab. Dies wird, wie bereits oben angesprochen, durch das Untermaß der Aussparung in der Unterkonstruktion gegenüber dem Dübelaußendurchmesser erreicht. Aufgrund dieses Untermaßes kommt es bei Eintreiben des Dübels in der Regel zu mehr oder minder großen radialen Verformungen, die durch den Längsschlitz aufgefangen werden, sowie zu Stauchungen vor allem im Bereich der Stirnseite des Dübels und des Dübelendes, die durch das Eintreiben bewirkt werden. Hinzu kommen Verletzungen der Außenhaut des Dübels durch mechanische Reibung an der Bohrlochwand, ebenfalls insbesondere am Dübelende sowie im Schulterbereich des Dübels. Diese Stauchungen und Verletzungen der Außenhaut sind unvermeidbar, wenn man auf einen festen Sitz des Dübels nicht verzichten will.

Aufgrund der Verletzungen der Außenhaut treten insbesondere im Bereich der Stirnflächen und am Dübelende vermehrt Korrosionsschäden durch Feuchtigkeitseinwirkung auf. Dies ist insbesondere bei wärmegedämmten hinterlüfteten Fassaden der Fall, weil hier als Folge der Wärmedämmung der Dübel über die Wand sowohl mit dem temperierten Wohnbereich in Kontakt steht als auch über die Fassade mit der in der Regel feuchteren und häufig wärmeren Außenluft. Unter solchen Bedingungen kommt es zur Kondensation von Feuchtigkeit und nachfolgend zu feuchtigkeitsbedingten Korrosionsschäden, insbesondere durch Bildung von Rost.

Zur Vermeidung solcher Korrosionsschäden werden aus eisenhaltigen Materialien gefertigte Dübel bereits seit langem mit korrosionsschützenden Überzügen versehen. Tatsächlich werden nicht korrosionsgeschütze Dübel für den Fassadenbau gar nicht mehr zugelassen, da hierdurch ein Gefährdungspotential durch sich lösende und herabstürzende Fassadenteile besteht; dies muß auch im Zusammenhang mit der normalerweise sehr langen Lebensdauer eines Gebäudes und der daran befestigten Fassade gesehen werden.

Herkömmliche Einschlagdübel für den Fassadenbau werden mit einem zinkhaltigen Überzug gegen Korrosion geschützt. In der Regel wird dieser Überzug durch galvanisches- oder Feuerverzinken aufgebracht. Diese Maßnahmen gewährleisten eine gleichmäßige Schichtdicke und damit einen recht zuverlässigen Korrosionsschutz. Insbesondere ist die Haftung der schützenden Zinkschicht auf dem Unterlagemetall recht gut.

Dennoch treten auch bei herkömmlichen Zinküberzügen im Laufe der Zeit mehr oder minder starke Korrosionsschäden auf, insbesondere in den oben angesprochenen Bereichen, wo durch mechanische Beanspruchung der schützende Zinküberzug verletzt wird. Hierzu trägt auch der ungehinderte Zutritt der Außenatmosphäre durch die hinterlüftete Fassade und den hohlen Dübelkern zum Dübelende bei.

Die Verzinkung von Gegenständen auf galvanischem Weg oder durch Eintauchen in Schmelzbädern ist technisch recht aufwendig und hat eine Reihe von Nachteilen. Dazu gehört bei der galvanischen Verzinkung eine erhebliche Gefährdung der Umwelt durch die galvanischen Bäder sowie die Gefahr der Wasserstoffversprödung des damit aufgetragenen Zinküberzuges. Die Feuerverzinkung andererseits führt zu relativ großen Schichtdicken von 40 bis 100 µm, wobei dieser hohen Schichtdicke kein adäquater Korrosionsschutz gegenübersteht.

Andererseits konnten sich andere Korrosionsschutzverfahren bislang nicht durchsetzen. Beschichtungen mit zinkhaltigen organischen Materialien wurden bisher als nicht ausreichend angesehen, da angenommen wurde, daß die beim Eintreiben in die Bohrlöcher zu erwartende starke mechanische Beanspruchung zu starken Verletzungen der Schutzschicht und damit zu vermehrter Korrosion gerade an den kritischen Stellen führen würde. Dementsprechend waren solche Dübel bisher auch für den Fassadenbau nicht zugelassen.

Es wurde nun überraschend gefunden, daß mit einem Verfahren der eingangs geschilderten Art mit den im Anspruch 1 genannten Verfahrensschritten eine korrosionsschützende Beschichtung von Dübeln erzielt werden kann, die bisherigen Beschichtungen zumindest gleichwertig ist.

Für das erfindungsgemäße Verfahren ist wesentlich, daß die Dübeloberflächen metallisch saüber sind, was durch eine abrasive Behandlung, beispielsweise durch Strahlen, erreicht werden kann. Alternativ kann auch eine herkömmliche Grundierungsschicht aufgebracht werden, beispielsweise eine grobkristalline Zinkphosphatschicht, die nach der Aufbringung in üblicher Weise getrocknet wird. Beide Arten der Oberflächenbehandlung können auch miteinander kombiniert werden.

Nach der Reinigung der Dübeloberfläche und/oder Aufbringung der Grundierung wird wenigstens eine Schicht eines zinkhaltigen organischen Beschichtungsmaterials mechanisch aufgebracht. Das Beschichtungsmaterial enthält neben der Zinkkomponente übliche organische Bindemittel und Lösemittel sowie übliche Zusatzstoffe. Ein geeignetes Material wird von der Firma Ewald Dörken AG unter der Bezeichnung DELTA-Tone vertrieben. Dieses Material ist bislang für die Behandlung von Dübeln und insbesondere von Einschlagdübeln noch nicht angewandtworden.
Sowohl die Grundierung als auch die wenigstens eine Schicht des zinkhaltigen Beschichtungsmaterials wird auf einem üblichen mechanischen Weg aufgebracht, beispielsweise durch Eintauchen der Einschlagdübel, durch Spritzen oder durch Trommeln. Besonders bevorzugt ist das Trommeln, weil hierdurch eine große Anzahl von Einschlagdübeln - bis zu 20.000 Stück - gleichzeitig mit den Beschichtungsmaterialien behandelt werden können. Das Trommeln erlaubt zudem die sukzessive Durchführung eines Beschichtungs- und anschließenden Trocknungsschrittes, wobei die Trocknung bei Temperaturen bis zu 200° C vorgenommen wird, insbesondere über 10 bis 12 mm bei 175-200° C an der Luft.

Üblicherweise wird die zinkhaltige organische Beschichtung durch fünf- bis zehnminütiges Trommeln der Einschlagdübel zusammen mit dem Beschichtungsmaterial aufgebracht. Vorzugsweise wird der Beschichtungsvorgang nach kurzem Trocknen wiederholt, so daß die behandelten Dübel zwei Schichten des zinkhaltigen Materials mit einer Gesamtschichtdicke von 8 bis 16 µm , insbesondere etwa 13 µm, aufweisen.

Auf die mindest eine zinkhaltige organische Schicht wird anschließend, ebenfalls durch Trommeln, noch ein organischer Überzug als Schutzschicht aufgebracht, vorzugweise in einer Dicke von 4 bis 10 µm. Es handelt sich dabei vorzugsweise um übliche organische Überzugs- und Beschichtungsmaterialien auf Kunstharzbasis. Ein geeignetes Material für diese Schutzschicht wird von der Firma Ewald Dörken AG unter der Bezeichnung DELTA-Seal vertrieben. Mit dieser Schutzschicht wird zum einen während der Lagerung und Handhabung die darunter befindliche zinkhaltige Beschichtung vor Beschadigung und Abrieb geschützt. Zum anderen wurde überraschend gefunden, daß durch diesen Überzug das Ausmaß der Beschädigung der zinkhaltigen Beschichtung beim Eintreiben des Dübels in das Bohrloch vermindert werden kann; dieser Effekt kann möglicherweise darauf zurückgeführt werden, daß kleine Verletzungen der Beschichtung durch das relativ plastische Material der zuletzt aufgebrachten organischen Schutzschicht wieder aufgefüllt und versiegelt werden.

Die Erfindung wird durch die beiliegenden Figuren näher erläutert.
- Fig. 1: zeigt in abgebrochener Darstellung und im Schnitt durch eine Unterkonstruktion und einen Einschlagdübel sowie ein Konstruktionsteil den Zustand bei festsitzendem Dübel im linken Teil und im rechten Teil den Ausgangszustand;
- Fig. 2: eine Draufsicht auf den Gegenstand der Fig. 1 in Richtung des Pfeiles; und
- Fig. 3: einen Schnitt durch eine Wand des erfindungsgemäß beschichteten Dübels mit den darauf angeordneten einzelnen Korrosionsschutzschichten.

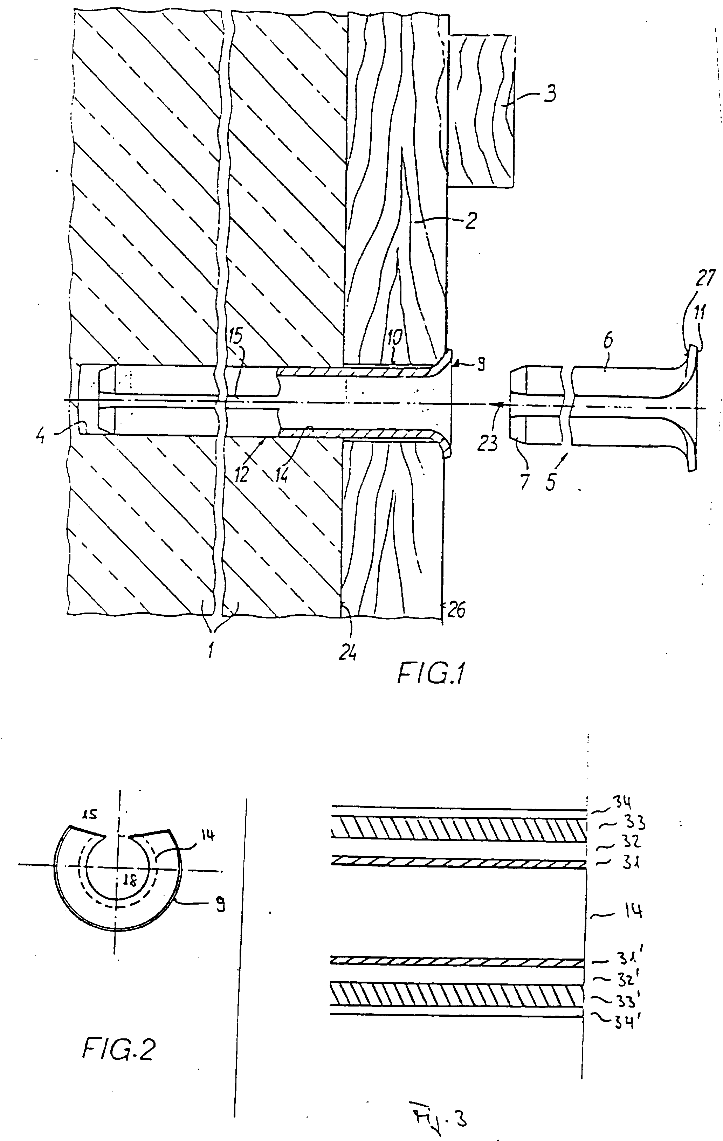

Gemäß Fig. 1 besteht die Unterkonstruktion (1) aus einer Betonwand, während die Konstruktionsteile (2, 3) einer Fassade eine Belattung ergeben, auf der sich Schindeln oder ähnliche Fassadenelemente befestigen lassen. Diese Konstruktionsteile bestehen aus Holz. Von außen ist vor dem Anbringen der Konstruktionsteile (2, 3) eine Bohrung (4) in der Unterkonstruktion hergestellt worden, welche blind endet. Der Durchmesser der Bohrung (4) ist geringer als der Außendurchmesser eines allgemein mit (5) bezeichneten Einschlagdübels im Ausgangszustand, der im rechten Teil der Fig. 1 wiedergegeben ist. Ein solcher Dübel weist einen Schaft (6) auf, der ein bei (7) abgefaßtes freies Ende besitzt, mit dem er in die Bohrung (4) eingetrieben werden kann. Kelchförmig bei (8) verbreitert sich aus dem Schaft (6) ein Schlagkopf (9). Dieser dient dazu, das bei (2) dargestellte und mit einer Bohrung (10) versehene Konstruktionsteil festzuhalten, wobei durch den Rand (11) des Schlagkopfes (9) ein Formschluß herbeigeführt wird.

Wie aus der Darstellung der Fig. 1 insbesondere aus deren rechtem Teil ersichtlich ist, bildet der Schaft (6) mit dem Schlagkopf (9) eine hülsenförmige Baueinheit, welche allgemein mit (12) bezeichnet ist. Der Mantel (14) der Hülse (12) weist einen axialen Schlitz (15) auf.

Wenn der Dübel in Richtung des Pfeiles (23) der Fig. 1 eingeführt wird, setzt er spätestens an der Oberfläche (24) der Unterkonstruktion (1) dem Einschieben in die Bohrung (4) einen erhöhten Widerstand entgegen. Durch Hammerschläge auf den Schlagkopf (9) wird der Schaft (6) des Dübels in die Bohrung (4) vorgetrieben, wobei sich zunächst die Breite des Längsschlitzes (5) vermindert und infolgedessen den Kraftschluß zwischen dem Schaft (6) und der Bohrung (4) ergibt.

Wie aus der Darstellung ersichtlich, treten am Einschlagdübel Verformungen und Beschädigungen vor allem im Bereich des Schlagkopfes (9), im Schulterbereich des Dübels und im Bereich des Dübelendes (7) auf, ferner durch Reibung im Bereich des Mantels (14). Letztere Beschädigungen sind von wenig großer Bedeutung, da durch den engen Kontakt mit dem Bohrloch atmosphärische Einflüsse weitgehend ausgeschlossen werden.

Fig. 2 zeigt einen üblichen Einschlagdübel mit Blick auf den Schlagkopf (9). Der durch den Schlagkopf (9) verdeckte Mantel ist als gestrichelte Linie (14) eingezeichnet. Im Inneren befindet sich der hohle Kern (18), der durch den Schlitz (15) in Längsrichtung offen ist.

Fig. 3 schließlich zeigt einen Schnitt durch die Wand (14) eines erfindungsgemäß beschichteten Dübels mit einer Grundierungsschicht (31), einer ersten zinkhaltigen Schicht (32), einer zweiten zinkhaltigen Schicht (33) und einen organischen Überzug (34) an der Außenseite, also der Seite, die dem Bohrloch zugewandt ist. Entsprechend finden sich an der Innenseite der Dübelwand (14), also der dem Hohlraum (18) zugewandten Seite die entsprechenden Schichten (31′ bis 34′) in der oben genannten Reihenfolge.

Ein erfindungsgemäß behandelter Dübel mit zwei DELTA-Tone-Schichten von insgesamt 13 µm und einer organischen DELTA-Seal-Schutzschicht wurden einem Klimawechselversuch unterworfen mit dem Ziel, das Verhalten eines solchen Dübels im verankerten Zustand in einer Fassade zu simulieren. Dazu wurden Holzlatten an Betonwürfeln befestigt. Diese Proben wurden sechs bzw. zwölf Monate lang einem 180 Min. dauernden Temperatur- und Feuchtewechsel unterworfen, und zwar mit folgenden Stufen:
- in 45 min von 15 Grad C, 50 % r.F.
   auf 30 Grad C, 95 % r.F.
- Verweilzeit 45 min
- in 45 min von 30 Grad C, 95 % r.F.
   auf 15 Grad C, 50 % r.F.
- Verweilzeit 45 min

Kondenswasserbildung auf den Proben trat während 100-120 min auf. Nach 6 Monaten fanden also 1440 Wechsel mit etwa 2800 h Kondenswasserbildung statt, nach 12 Monaten die doppelte Anzahl.

Nach 12 Monaten Versuchsdauer zeigen die Dübel an den Stellen Rostspuren, an denen die Beschichtung durch das Einschlagen verletzt war. An allen anderen Stellen war kein Rost festzustellen.

Des weiteren wurden Korrosionsprüfungen an entsprechend behandelten Einschlagdübeln durchgeführt. Je sechs Dübel aus drei Beschichtungschargen wurden im eingebauten Zustand geprüft, wobei je drei Dübel ein freies Ende vom 45 mm aufwiesen, während mit den restlichen drei Dübeln jeweils Holzleisten gegen einen Betonwürfel verspannt waren. Je fünf Dübel wurden nicht eingebaut geprüft.

Die Korrosionsprüfung erfolgte nach DIN 50 021-SS. Dabei werden die Dübel in einer genormten Prüfkammer bei 40 Grad kontinuierlich einem Nebel aus 3 %iger NaCl-Lösung ausgesetzt. Die Prüfdauer betrug 600 h, eine Bewertung des Korrosionsfortschritts wurde an den in der Prüfkammer verbleibenden Proben alle 24 h vorgenommen.

Nach abgeschlossener Prüfung zeigten die unverbauten Dübel geringe Weißrostbildung und punktförmig Rotrost bei Charge I und II, jedoch nicht bei Charge III.

Nach 144 h zeigten die eingebauten Dübel an der Stirnseite Rotrost an solchen Stellen auf, die beim Setzen mit einem Stahl-Setzdorn verletzt worden waren. Dies betraf vor allem solche Dübel, die in enge Bohrlöcher getrieben waren. Rotrost trat unabhängig vom Vorhandensein einer Holzlatte auf.

Nach Spalten der Betonwürfel wurde an Dübeln der Charge I und II an wenigen Stellen Rost sichtbar, während dies bei Charge III nicht der Fall war.

Um festzustellen, inwieweit eine Verletzung der Beschichtung durch Versetzen der Dübel in Beton die Korrosionsanfälligkeit erhöht, wurden fünfzehn Dübel in Beton versetzt und wieder gezogen. Diese Dübel wurden zusammen mit fabrikneuen Dübeln einer Freibewitterung einschließlich Regens während sechs Monaten ausgesetzt.

Es zeigte sich, daß die gezogenen Dübel an zwei Stellen zu roten begannen: an der Spitze und der Stirnseite. Dies sind die Stellen, die beim Setzen des Dübels nicht mechanisch verletzt wurden; an der Spitze durch Schaben am Lochrand und an der Stirn durch den Stahl-Setzdorn. Am restlichen Teil der Dübel wurde keinerlei Korrosion festgestellt.

Die Versuchsergebnisse belegen eine ausreichende Korrosionsschutzwirkung der Beschichtung. Die Ergebnisse des Salzsprühversuchs zeigen, daß der Dübel in unverbautem Zustand geringe Korrosionsspuren aufweist. Die beobachtete Weißrostbildung wäre auch an feuerverzinkten Bauteilen aufgetreten. Insgesamt zeigt das Verhalten der Dübel an den unbeschädigten Teilen, daß die Anforderungen, die an Galvanisch verzinkte Verbindungselemente zum Einsatz unter Außenbewitterung gemäß RAL-RG 660 Teil 1, Tabelle 1, gestellt werden, erfüllt werden.

Das erfindungsgemäße Beschichtungsverfahren läßt einen ausreichenden Schutz des Dübels erwarten, so lange dieser unverletzt ist. Durch mechanische Verletzung wird der Schutz zwar lokal und partiell aufgehoben, es tritt jedoch keine übermäßige Korrosion auf, die der Verwendung solcher Dübel für Fassadenbefestigungen entgegenstehen könnte. Die Einbuße an Verankerungstiefe durch Korrosion an der Dübelspitze ist gering.

## Patentansprüche

1. Verfahren zur korrosionsschützenden Beschichtung von Metalldübeln, insbesondere von Einschlagdübeln für den Fassadenbau, unter Aufbringung einer zinkhaltigen Schutzschicht, gekennzeichnet durch die folgenden Schritte
- mechanisches Reinigen der Dübeloberfläche und/oder Aufbringen einer Grundierung auf die Dübeloberfläche und Trocknen;
- mechanisches Aufbringen wenigstens einer Schicht eines zinkmetallhaltigen organischen Beschichtungsmaterials mit einer Dicke von 4 bis 8µm;
- Trocknen einer jeden aufgebrachten zinkhaltigen Schicht;
- Aufbringen einer organischen Schutzschicht; und
- Trocknen der organischen Schutzschicht.

2. Verfahren nach Anspruch 1, dadurch gekennzeichnet, daß die Beschichtungs- und Trocknungsschritte durch Trommeln vorgenommen werden.

3. Verfahren nach Anspruch 1 oder 2, dadurch gekennzeichnet, daß die Trocknung bei weniger als 200° C vorgenommen wird.

4. Verfahren nach einem der vorstehenden Ansprüche, dadurch gekennzeichnet, daß zwei Schichten des zinkhaltigen Beschichtungsmaterials mit einer Gesamtschichtdicke von 13 um aufgebracht werden.

5. Verfahren nach einem der vorstehenden Ansprüche, dadurch gekennzeichnet, daß eine Grundierung aus Zinkphosphat aufgebracht wird.

6. Korrosionsgeschützter Einschlagdübel für den Fassadenbau, beschichtet nach einem der Ansprüche 1 bis 5.

## Claims

1. A process for the anti-corrosive coating of metal dowels, more particularly hammered-in dowels for facade construction, by application of a zinc-containing protective layer, characterised by the following steps:
- mechanical cleaning of the dowel surface and/or application of a priming coat to the dowel surface and drying;
- mechanical application of at least one layer of a metallic zinc-containing organic coating material 4 to 8 µm thick;
- drying each applied zinc-containing layer;
- applying an organic protective layer; and
- drying the organic protective layer.

2. A process according to claim 1, characterised in that the coating and drying steps are effected by tumbling.

3. A process according to claim 1 or 2, characterised in that drying is effected at less than 200°C.

4. A process according to any of the preceding claims, characterised in that two layers of zinc-containing coating material are applied, the total thickness of the layer being 13 µm.

5. A process according to any of the preceding claims, characterised in that a priming coat of zinc phosphate is applied.

6. A corrosion-proof hammered-in dowel for facade construction, coated according to any of claims 1 to 5.

## Revendications

1. Procédé destiné au revêtement anti-corrosion de chevilles métalliques, en particulier de chevilles à enfoncer destinées à la construction de façades, en appliquant une couche protectrice contenant du zinc, caractérisé par les étapes suivantes
- nettoyage mécanique de la surface de la cheville et/ou application d'une couche d'apprêt sur la surface de la cheville et séchage ;
- application mécanique d'au moins une couche d'un matériau de revêtement organique contenant du zinc d'une épaisseur de 4 à 8 µm ;
- séchage de chacune des couches appliquées contenant du zinc ;
- application d'une couche protectrice organique ; et
- séchage de la couche de protection organique.

2. Procédé selon la revendication 1, caractérisé en ce que les étapes de revêtement et de séchage sont réalisées à l'aide de tambours.

3. Procédé selon la revendication 1 ou 2, caractérisé en ce que le séchage s'effectue à une température inférieure à 200°C.

4. Procédé selon l'une des revendications précédentes, caractérisé en ce que l'on applique deux couches du matériau de revêtement contenant du zinc à raison d'une épaisseur de couche globale de 13 µm.

5. Procédé selon l'une des revendications précédentes, caractérisé en ce que l'on applique une couche d'apprêt au phosphate de zinc.

6. Cheville à enfoncer protégée contre la corrosion, destinée à la construction de façades, revêtue selon l'une des revendications 1 à 5.
